(19) Europäisches Patentamt
European Patent Office
Office européen des brevets

(11) EP 1 501 233 A2

(12) EUROPEAN PATENT APPLICATION

(43) Date of publication:
26.01.2005 Bulletin 2005/04

(51) Int Cl.7: H04L 1/18

(21) Application number: 04017675.2

(22) Date of filing: 26.07.2004

(84) Designated Contracting States:
AT BE BG CH CY CZ DE DK EE ES FI FR GB GR HU IE IT LI LU MC NL PL PT RO SE SI SK TR
Designated Extension States:
AL HR LT LV MK

(30) Priority: 25.07.2003 KR 2003051598
28.08.2003 KR 2003059978

(71) Applicant: Samsung Electronics Co., Ltd.
Suwon-si, Gyeonggi-do (KR)

(72) Inventors:
- Kim, Youn-Sun
Yeongtong-gu Suwon-si Gyeonggi-do (KR)
- Kwon, Hwan-Joon
Yeongtong-gu Suwon-si Gyeonggi-do (KR)
- Kim, Dong-Hee
Yeongtong-gu Suwon-si Gyeonggi-do (KR)
- Han, Jin-Kyu
Yeongtong-gu Suwon-si Gyeonggi-do (KR)

(74) Representative: Grünecker, Kinkeldey, Stockmair & Schwanhäusser Anwaltssozietät
Maximilianstrasse 58
80538 München (DE)

# (54) Method and apparatus for hybrid automatic repeat request

(57) Disclosed is a method and apparatus for transmitting reverse data by a mobile station in a mobile communication system supporting a Hybrid Automatic Repeat request (HARQ). In the mobile station, a controller determines the maximum number of transmissions for a transmission encoder packet if there is an initial transmission subpacket for the encoder packet, and generates an information sequence representing a size of the encoder packet, a number of retransmissions, and a determined maximum number of transmissions. A transmitter encodes the information sequence and transmits the encoded information sequence together with the initial transmission subpacket in the same time period as a time period for transmitting the initial transmission subpacket.

Num. of Tx per
EP restricted to 2 instead of 3
Traffic Channel is DTXed
Init
Tx
202
Re
Tx1
204
206
Init
Tx
208
RRI
RRI
RRI
RRI
Pilot Channel
NAK
210
NAK
212
NAK
214

FIG.2

EP 1 501 233 A2

## Description

## BACKGROUND OF THE INVENTION

### 1. Field of the Invention

The present invention relates generally to a mobile communication system supporting a Hybrid Automatic Repeat reQuest (HARQ), and in particular, to a method and apparatus for sending, by a mobile station to a base station, information related to the maximum number of transmissions for a particular encoder packet and adjusting, by the base station, an ACK/NAK and a power control target setpoint using the received information related to the maximum number of transmissions.

### 2. Description of the Related Art

In general, the current mobile communication systems can be classified into a system supporting only a voice service and a system supporting only a data service. A typical example of such systems is a Code Division Multiple Access (CDMA) mobile communication system. The current IS-95 CDMA system supports only a voice service. As communication technology is advanced along with the increasing user demands, the mobile communication system is evolving into a system supporting a high-speed data service. For example, a CDMA2000 system has been proposed to support both a voice service and a high-speed data service.

A mobile communication system, in which data is transmitted and received over a radio link, may suffer a data loss during transmission/reception. In the case of a voice service which is a typical real-time service, even though data loss occurs, it is not necessary to retransmit the lost (or defective) data. However, in the case of a packet data service, when data loss occurs, the lost data must be retransmitted in order to correctly send accurate information. Therefore, a communication system supporting the data transmission performs data retransmission using several retransmission techniques.

A Radio Link Protocol (RLP) retransmission technique (also known as "RLP ARQ"), one of the known retransmission techniques, will be described herein below. When a reception error occurs, an RLP layer of a base station reports the error to a mobile station using a signaling channel, and the mobile station receiving the report retransmits the same packet data. However, the retransmission by the RLP layer requires a long time from the initial transmission time of the defective traffic data to a retransmission time. This is because a base station receiver does not process packet data in a physical layer, but only in an upper layer of an RLP layer or a higher layer. Further, the RLP retransmission technique cannot reuse the received defective data. Therefore, it is preferable to minimize the RLP retransmission in a general communication system.

Hybrid Automatic Repeat reQuest (HARQ) can make up for the defects of the RLP retransmission technique. In HARQ, when a transmission error occurs, a transmitter performs the retransmission in a physical layer, and a receiver combines the retransmitted data with the corresponding previously transmitted signal, thereby correcting an error that occurred in the data. That is, in the HARQ, the physical layer determines whether or not to perform retransmission, thus preventing an increase in an error processing time. In addition, the received defective packet data can be reused.

Even in case of the HARQ, it is necessary to use the RLP retransmission for some of the packets due to a limitation in the number of retransmissions that are available. The HARQ reduces the number of the retransmissions by the RLP ARQ by reducing a residual error rate which is an error rate of the finally combined data, to a very small value of 0.01 or less. However, the relative importance of the RLP retransmission in the HARQ is much less than the relative importance of the RLP retransmission in a non-HARQ.

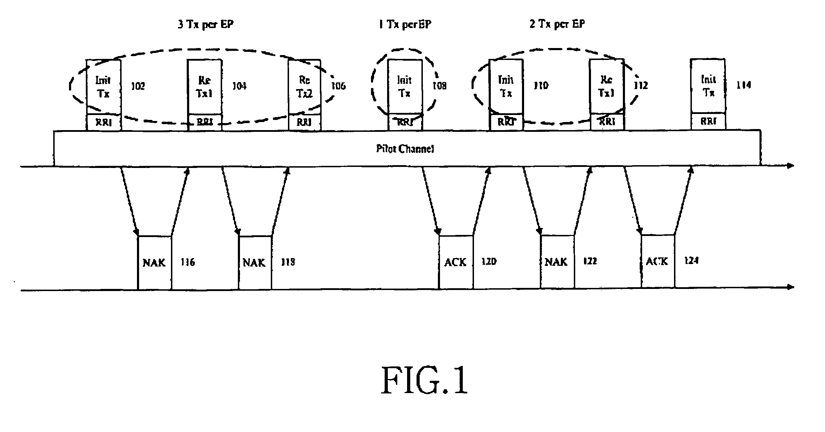

FIG. 1 is a diagram illustrating a reverse HARQ operation for transmitting/receiving traffic data in a general mobile communication system. Referring to FIG. 1, a mobile station transmits a first subpacket for an encoder packet (EP), or a new traffic packet, in a reverse time period 102. This is referred to as an "initial transmission." A reverse rate indicator (RRI) that is transmitted together with the traffic data by the mobile station is provided to inform a base station of an EP size that indicates the number of the encoded bits that arc transmitted in the same time period and a subpacket identifier (SPID) indicating a unique retransmission number. The base station performs the decoding using the EP size and the SPID acquired from the RRI.

Upon failure to correctly receive the initially transmitted subpacket, the base station transmits to the mobile station an NAK indicating the occurrence of a decoding error in a corresponding forward time period 116. The mobile station receiving the NAK signal transmits a second subpacket for the same encoder packet in a time period 104 designated for the retransmission of the initially transmitted subpacket. This is referred to as a "first retransmission." If the first-retransmitted subpacket also fails to be correctly received at the base station, the base station transmits an NAK representing the occurrence of a decoding error to the mobile station in the same manner as above and in a time period 118. The mobile station receiving the NAK signal transmits a third subpacket in a time period 106 for a second retransmission of the same encoder packet. This is referred to as a "second retransmission."

In FIG. 1, the maximum number of the subpackets that the mobile station can transmit for the same encoder packet is limited to 3. That is, after performing the initial transmission, the first retransmission and the second retransmission, the mobile station does not perform any more transmissions on the corresponding encoder packet. This prevents the mobile station from unlimitedly performing the retransmission on one encoder packet in very poor radio environment, which would cause an overload on the mobile station and the base station. Therefore, the base station does not transmit an acknowledgement/negative-acknowledgement (ACK/NAK) signal after receiving a second-retransmitted subpacket.

Subpackets for the time periods 102, 104 and 106 are transmitted for a first encoder packet. After transmission of the first encoder packet is completed, the mobile station transmits a first subpacket for a next encoder packet in a time period 108 when the mobile station can next transmit traffic (Initial Transmission). If the decoding of the initially transmitted subpacket is successful, the base station transmits to the mobile station an ACK signal indicating the successful decoding in a time period 120. The mobile station receiving the ACK signal ccases performing additional transmissions on the corresponding encoder packet, and begins the transmission for a next encoder packet.

In FIG. 1, the mobile station transmits on the first encoder packet for a maximum of three times. Further, the mobile station transmits on a second encoder packet only once. Finally, the mobile station transmits on a third encoder packet only twice (110 and 112), and performs the responses to the transmissions (122 and 124).

In HARQ, the maximum. number of the transmissions between the mobile station and the base station is prescribed. Therefore, if the base station succeeds in the correct decoding of the information before it receives a corresponding subpacket of the maximum number of transmissions, the base station terminates the transmission by transmitting an ACK to the mobile station.

When the maximum number of the transmissions between the mobile station and the base station is predefined as described above, the mobile station always performs an HARQ operation in accordance with the predefined maximum number of transmissions. However, the mobile station can itself adjust the maximum number of transmissions without a previous agreement with the base station. For example, when the mobile station desires to transmit a data packet that needs a low time delay, the mobile station can set the maximum number of transmissions to a value less than a predetermined number.

In a CDMA2000 1x mobile communication system, power control is performed on a reverse pilot signal so that a traffic channel for a reverse data transmission maintains a constant reception performance. A power control method for a reverse signal can be divided into the following two methods. In a first method, a base station transmits a power control command to a mobile station during every time slot (e.g., 1.25 ms) so that a received pilot energy-to-noisc ratio Ep/Nt of a signal transmitted by the mobile station approaches a power control target setpoint set by the base station. Controlling the transmission power of a mobile station in this method is called an "inner loop power control." A second method corresponds to an "outer loop power control" method for adjusting the target setpoint during every frame. The outer loop power control method adjusts a power control target setpoint so that the reception performance of a received traffic channel can be maintained.

However, in an HARQ operation, when a mobile station itself adjusts the maximum number of transmissions, i.e. when the mobile station determines the maximum number of transmissions, a base station is not informed of the adjustment. For example, it is assumed herein that the mobile station adjusts the maximum number of transmissions from 3 to 2 at its own discretion. In this case, if the base station fails to perform a successful decoding on the second transmission, it transmits to the mobile station an NAK for requesting the retransmission. Here, because the maximum number of the retransmissions is set to 2, the mobile station transmits on a next encoder packet, disregarding the NAK from the base station.

In this case, the reason why the mobile station transmits on the next encoder packet is unknown to the base station. That is, the base station does not know whether the reason why the mobile station transmits the encoder packet only twice is because the mobile station set the maximum number of transmissions to 2 at its own discretion or because a NAK signal transmitted by the base station is misinterpreted by the mobile station as an ACK. If the reason is because the mobile station sets the maximum number of the transmissions to 2 at its own discretion, the power control target setpoint is allowed to increase when a successful decoding fails after a second transmission. In contrast, if the reason is caused by the misinterpretation of an ACK/NAK, the adjustment of the power control target setpoint may have a negative influence on the outer loop power control aimed at maintaining a reception performance of a traffic channel. Because the base station cannot determine whether or not the mobile station adjusted the maximum number of transmissions at its own discretion, or if the mobile station transmitted a defective encoder packet for which an NAK is transmitted, less than a predetermined number of times, the base station cannot determine if it should adjust the power control target setpoint.

## SUMMARY OF THE INVENTION

It is, therefore, an object of the present invention to provide a method and an apparatus for effectively employing an outer loop power control by including the maximum number of transmissions, arbitrarily determined by a mobile station, in a reverse rate indicator (RRI) before being transmitted to a base station in Hybrid Automatic Repeat reQuest (HARQ).

It is another object of the present invention to provide a method and an apparatus for effectively employing a rate control by including the maximum number of transmissions, arbitrarily determined by a mobile station, in an RRI before being transmitted to a base station in HARQ.

In accordance with a first aspect of the present invention, there is provided a method for transmitting reverse data by a mobile station in a mobile communication system supporting Hybrid Automatic Repeat reQuest (HARQ). The method includes determining the maximum number of transmissions for a transmission encoder packet if there is an initial transmission subpacket for the encoder packet; and generating an information sequence representing a size of the encoder packet, the number of retransmissions, and the determined maximum number of transmissions, encoding the information sequence, and transmitting the encoded information sequence together with the initial transmission subpacket in the same time period as a time period for the initial transmission subpacket.

In accordance with a second aspect of the present invention, there is provided a method for receiving reverse data by a base station in a mobile communication system supporting Hybrid Automatic Repeat reQuest (HARQ). The method includes receiving an information sequence representing a size of an encoder packet, the number of retransmissions, and the maximum number of transmissions, and a subpacket corresponding to the encoder packet, in a reverse direction during initial transmission; suspending a retransmission procedure for the encoder packet without transmitting a response to the subpacket if the number of received subpackets corresponding to the encoder packet reaches the maximum number of transmissions; and generating and transmitting a response to the subpacket if the number of received subpackets corresponding to the encoder packet does not reach the maximum number of transmissions.

In accordance with a third aspect of the present invention, there is provided an apparatus for transmitting reverse data by a mobile station in a mobile communication system supporting Hybrid Automatic Repeat reQuest (HARQ). The apparatus including a controller for determining the maximum number of transmissions for a transmission encoder packet if there is an initial transmission subpacket for the encoder packet, and generating an information sequence representing a size of the encoder packet, the number of retransmissions, and the determined maximum number of transmissions; and a transmitter for encoding the information sequence and transmitting the encoded information sequence together with the initial transmission subpacket in the same time period as a time period for the initial transmission subpacket.

In accordance with a fourth aspect of the present invention, there is provided an apparatus for receiving reverse data by a base station in a mobile communication system supporting Hybrid Automatic Repeat reQuest (HARQ). The apparatus including a receiver for receiving an information sequence representing a size of an encoder packet, the number of retransmissions, and the maximum number of transmissions, and a subpacket corresponding to the encoder packet, in a reverse direction; and a controller for suspending a retransmission procedure for the encoder packet without transmitting a response to the subpacket if the number of received subpackets corresponding to the encoder packet reaches the maximum number of transmissions, and transmitting a response to the subpacket if the number of received subpackets corresponding to the encoder packet does not reach the maximum number of transmissions.

## BRIEF DESCRIPTION OF THE DRAWINGS

The above and other objects, features and advantages of the present invention will become more apparent from the following detailed description when taken in conjunction with the accompanying drawings in which:

FIG. 1 is a diagram illustrating a reverse HARQ operation for the transmitting/receiving of traffic data in a general mobile communication system;
FIG. 2 is a diagram illustrating a reverse HARQ operation of a mobile station according to an embodiment of the present invention;
FIG. 3 is a diagram illustrating a reverse HARQ operation of a mobile station according to another embodiment of the present invention;
FIG. 4 is a flowchart illustrating the transmitting, by a mobile station, of an RRI and the receiving of an ACK/NAK according to an embodiment of the present invention;
FIG. 5 is a diagram illustrating a mapping rule for mapping an EP size, SPID and an N_Max_Tx to an RRI sequence according to an embodiment of the present invention;

FIG. 6 is a flowchart illustrating the receiving, by a base station, of an RRI channel and the transmitting of an ACK/NAK according to an embodiment of the present invention;

FIG. 7 is a block diagram illustrating a mobile station transmitter for transmitting an RRI sequence in a reverse direction according to an embodiment of the present invention;

FIG. 8 is a block diagram illustrating a base station receiver for receiving an RRI sequence in a reverse direction according to an embodiment of the present invention;

FIG. 9 is a diagram illustrating a method for the transmitting/receiving of reverse data in a mobile communication system supporting a HARQ according to another embodiment of the present invention;

FIG. 10 is a flowchart illustrating a method for transmitting reverse data in a mobile communication system supporting a HARQ according to another embodiment of the present invention; and

FIG. 11 is a flowchart illustrating a method for receiving reverse data in a mobile communication system supporting a HARQ according to another embodiment of the present invention.

## DETAILED DESCRIPTION OF THE PREFERRED EMBODIMENT

Several preferred embodiments of the present invention will now be described in detail with reference to the annexed drawings. In the following description, a detailed description of known functions and configurations incorporated herein has been omitted for conciseness.

The present invention provides a method in which if a mobile station at its own discretion decreases the maximum number of transmissions for a HARQ, the mobile station reports the corresponding information to a base station. The mobile station transmits a reverse rate indictor (RRI) including an EP size indicating the number of encoded bits transmitted in the same time period and a subpacket identifier (SPID) indicating a unique retransmission number. In an embodiment of the present invention, the RRI further includes information related to the maximum number of the transmissions.

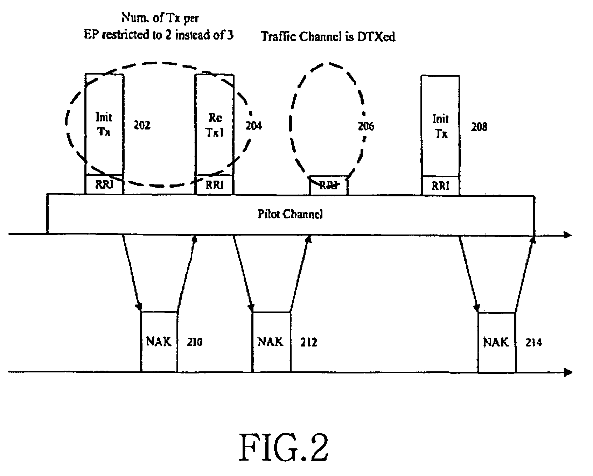

FIG. 2 is a diagram illustrating an HARQ operation of a mobile station according to an embodiment of the present invention. Herein, the maximum number of transmissions between a base station and a mobile station is predefined as 3, and the mobile station has adjusted the maximum number of transmissions to 2 at its own discretion.

In FIG. 2, an RRI transmitted by the mobile station includes an EP size for an encoder packet transmitted in a corresponding time period and an SPID representing a unique number of a subpacket.

Referring to FIG. 2, a mobile station sequentially performs initial transmission and retransmission on the subpackcts corresponding to a first encoder packet in reverse time periods 202 and 204. Thereafter, even though an NAK is received from a base station in a time period 210, the mobile station transmits only an RRI in a time period 206 without performing a second retransmission. The RRI includes the information indicating a third transmission and the information related to an EP size of an encoder packet corresponding to the subpackets. Then the base station adjusts a target setpoint for outer loop power control from a reception time of the RRI.

In FIG 2, although the base station can correct for possible problem caused if the mobile station docs not perform a retransmission after the base station transmits the NAK 212, the mobile station cannot transmit a new encoder packet while transmitting the RRI 206. In addition, because the base station does not know if the mobile station adjusted the maximum number of transmissions at its own discretion, the base station unnecessarily transmits the NAK signal 212 corresponding to a third subpacket.

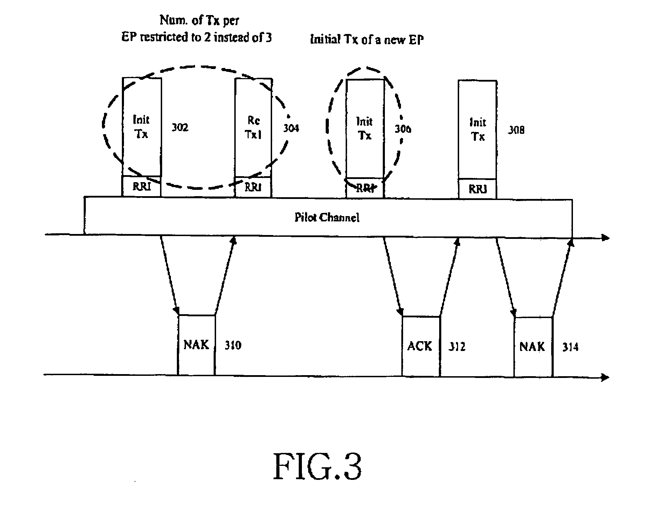

FIG. 3 is a diagram illustrating an HARQ operation of a mobile station according to another embodiment of the present invention. Likewise, the maximum number of transmissions between a base station and a mobile station is predefined as 3, and the mobile station has adjusted the maximum number of transmissions to 2 at its own discretion.

Referring to FIG. 3, a mobile station sequentially transmits subpackets for a first encoder packet in the reverse time periods 302 and 304 by an initial transmission and a retransmission. Thereafter, the mobile station immediately transmits a first subpacket for a new encoder packet in a time period 306. Here, each of the RRIs transmitted in the time periods 302, 304 and 306 includes an EP size for an encoder packet that was transmitted in the corresponding time period and an SPID representing a unique number of the corresponding subpacket.

That is, the mobile station reports to a base station using an RRI an EP size of a corresponding encoder packet, an SPID, and the information related to the maximum number of the transmissions. The base station can determine the maximum number of the transmissions for the corresponding encoder packet transmitted by the mobile station, using the information transmitted with the RRI by the mobile station. Therefore, the base station is informed of the fact that the mobile station will no longer transmit a subpacket for the same encoder packet after the subpacket for the time period 304. Thus, after receiving the subpacket for the time period 304, the base station performs the outer loop power control using a decoding result on the subpackets for the time periods 302 and 304, without waiting for any further retransmission.

In FIG. 3, after receiving a subpacket for the time period 304, the base station does not transmit an ACK/NAK as a response to the subpacket. This increases the forward system capacity by preventing the unnecessary transmission of an ACK/NAK signal.

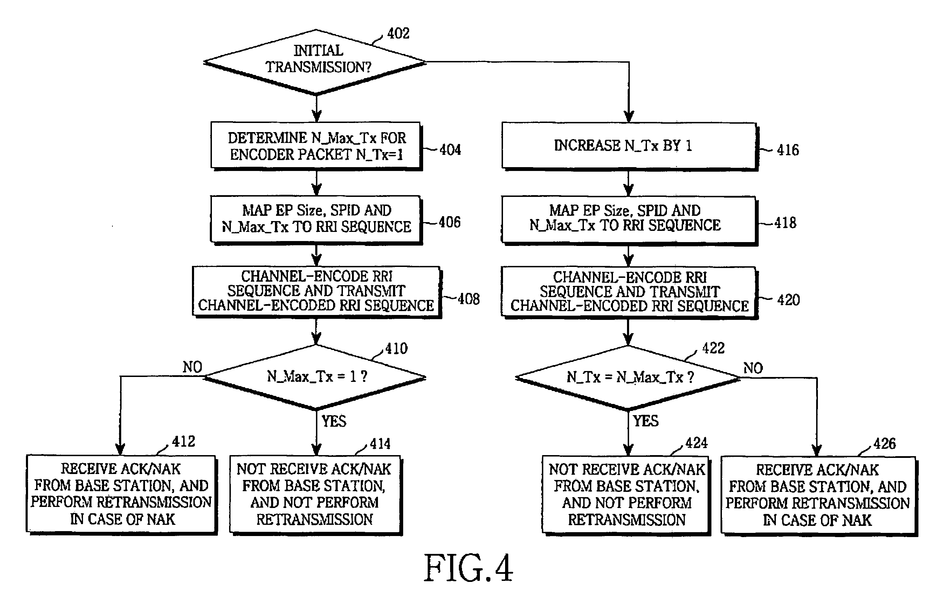

FIG. 4 is a flowchart illustrating the determining, by a mobile station, the information to be mapped to an RRI and the receiving of an ACK/NAK from a base station according to an embodiment of the present invention. Referring to FIG. 4, in step 402, a mobile station determines if current transmission for a subpacket is an initial transmission. If it is determined that the current transmission is an initial transmission, the mobile station determines in step 404 the maximum number of the transmissions for a corresponding encoder packet. Herein, the maximum number of transmissions determined by the mobile station is represented by a parameter 'N_Max_Tx'. A value of N_Max_Tx is equal to or less than the maximum number of transmissions predefined between a mobile station and a base station. The value of N_Max_Tx is arbitrarily determined by the mobile station by taking into consideration how much traffic data is to be transmitted by the mobile station and is susceptible to a time delay, and a memory status of the mobile station. Further, in step 404, 'N_Tx' corresponds to the number of the transmissions for a subpacket transmitted by the mobile station for one encoder packet. In step 404, because the current transmission is an initial transmission, N_Tx representing the number of transmissions for the corresponding encoder packet is set to '1'.

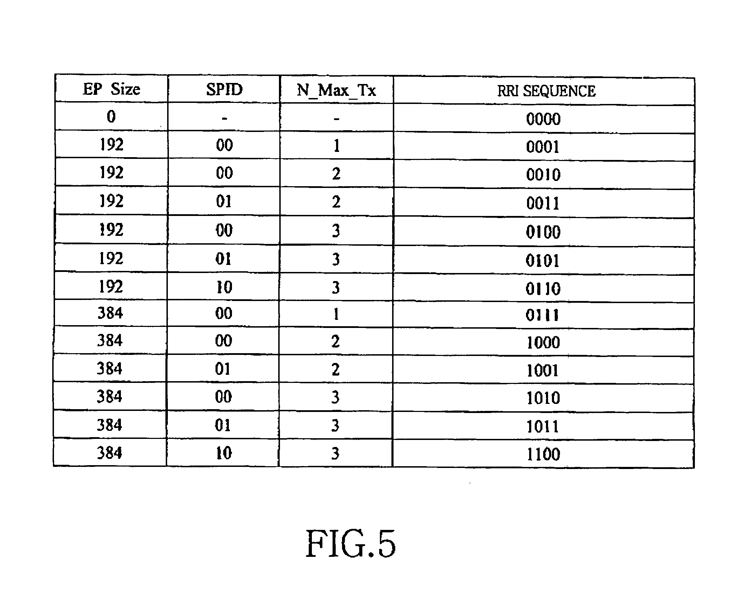

After determining a value of N_Max_Tx, the mobile station maps an EP size of the transmission encoder packet, an SPID, and the N_Max_Tx to an RRI sequence in step 406. The EP size, SPID and N_Max_Tx are mapped to the RRI sequence in a method illustrated in FIG 5 by way of example.

FIG. 5 lists the mapping rules for mapping the possible combinations of the EP size of an encoder packet, SPID and N_Max_Tx to their unique RRI sequences so that a mobile station can send the three types of the information to a base station using only a 4-bit RRI sequence. When a separate number of bits are assigned for each type of the information without using the mapping rule of FIG. 5, a 6-bit RRI sequence is needed. That is, the RRI sequence needs a total of 6 bits: 2 bits for representing the EP size, 2 bits for representing the SPID, and 2 bits for representing the N_Max_Tx.

In an example of FIG 5, there are three possible EP sizes of 0, 192 and 384, and a mobile station can perform the transmission a maximum number of three times. In this case, the number of bits necessary for a needed RRI sequence is determined by the number N_C of possible combinations, which is defined in Equation (1) as

$$N_C = (\text{number of possible EP Sizes - 1}) \times \Sigma N_Max_Tx + 1 \qquad (1)$$

In Equation (1), $\Sigma N_Max_Tx$ denotes the sum of the available 'N_Max_Tx's. In the case of FIG. 5, N_Max_Tx can have values of 3, 2, and 1. Thus, $\Sigma N_Max_Tx = 6$.

If the possible maximum number of the transmissions for the mobile station is 3 and there arc three possible EP sizes of 0, 192 and 384, it can be understood from Equation (1) that $(3-1)\times(3+2+1)+1=13$ RRIs are needed. Therefore, if an RRI sequence of a minimum of 4 bits is used, the possible combinations of the EP size of an encoder packet, the SPID and the N_Max_Tx can be mapped to their unique RRI sequences.

As another example, if there are 10 possible EP sizes of 0, 192, 384, 768, 1536, 3072, 4608, 6144, 9216, and 12288, it is noted from Equation (1) that $(10-1)\times(3+2+1)+1=55$ RRIs arc needed, and the number of bits necessary for the 55 RRIs is 6. Therefore, if an RRI sequence of a minimum of 6 bits is used, the possible combinations of the EP size of an encoder packet, the SPID and the N_Max_Tx can be mapped to their unique RRI sequences.

Referring back to FIG. 4, after mapping the possible combinations of the EP size of an encoder packet, the SPID, and the N_Max_Tx to the corresponding RRI sequences according to the mapping rule illustrated in FIG. 5 in step 406, the mobile station channel-encodes a corresponding RRI sequence and transmits the channel-encoded RRI sequence together with traffic data (or initially-transmitted subpacket) in step 408.

After transmitting the RRI sequence and the traffic data, the mobile station determines whether or not to receive an ACK/NAK. If it is determined in step 410 that the initial transmission was performed and a value of N_Max_Tx is 1, the mobile station does not receive the ACK/NAK for the initial transmission on the corresponding encoder packet and does not perform an additional retransmission in step 414. Here, non-performance of an additional retransmission means the terminating of the transmission on the corresponding encoder packet and then performing an initial transmission on a next encoder packet.

In contrast, if it is determined in step 410 that the initial transmission was performed and a value of N_Max_Tx is greater than 1, the mobile station receives the ACK/NAK for the initial transmission and performs a retransmission in the case that a NAK signal is received, in step 412. Here, the performing of the retransmission is the transmitting of a next subpacket for the corresponding encoder packet.

However, if it is determined in step 402 that the current transmission is a retransmission, the mobile station increases a value of N_Tx by 1 in step 416. Thereafter, in step 418, the mobile station maps a possible combination of the EP size of an encoder packet, the SPID, and the N_Max_Tx to a corresponding RRI sequence according to the mapping rule illustrated in FIG. 5. In step 420, the mobile station channel-encodes the RRI sequence and transmits the channel-encoded RRI sequence together with a traffic channel.

After transmitting the RRI sequence and the traffic data (or the retransmitted subpacket), the mobile station determines whether or not to receive an ACK/NAK for the corresponding subpacket. If it is determined in step 422 that N_Tx is equal to N_Max_Tx, the mobile station does not receive the ACK/NAK for the retransmission on the corresponding encoder packet, does not perform the additional retransmission, and starts the transmission of a next encoder packet in step 424. However, if it is determined in step 422 that N_Max_Tx is greater than N_Tx, the mobile station receives the ACK/NAK for the corresponding subpacket and retransmits a next subpacket for the corresponding encoder packet in the case that a NAK signal is received, in step 426.

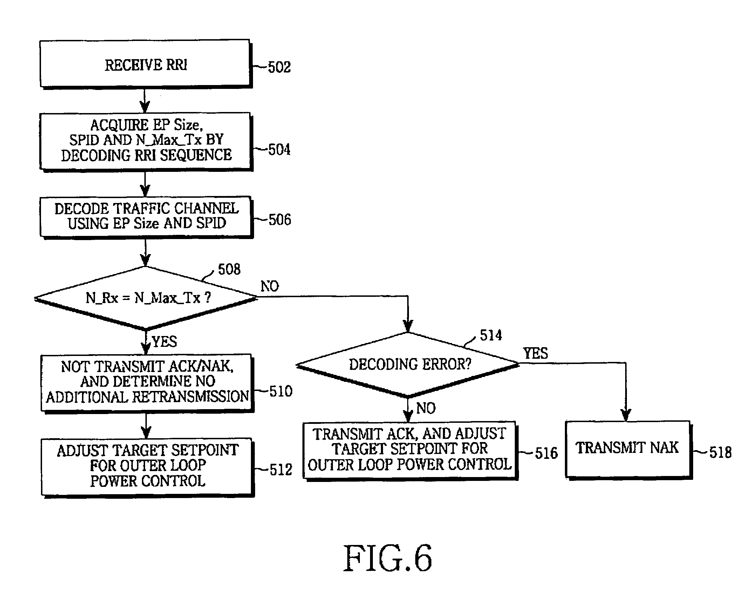

FIG. 6 is a flowchart illustrating the receiving, by a base station, of the information carried by an RRI channel and the transmitting of an ACK/NAK according to an embodiment of the present invention. Referring to FIG. 6, in step 502, a base station receives an RRI channel from a mobile station. In step 504, the base station acquires the EP size, the SPID and the N_Max_Tx by demapping an RRI sequence detected by the decoding of the RRI channel into a combination of the EP size, the SPID and the N_Max_Tx.

In step 506, the base station decodes a traffic channel using the acquired EP size and the SPID. After the decoding, the base station determines whether or not to transmit an ACK/NAK signal for a corresponding subpacket.

In step 508, the base station compares the number of the received subpackets for the corresponding encoder packet with the N_Max_Tx transmitted with an RRI by the mobile station. N_Rx in step 508 is the number of subpackets received by the base station for a particular encoder packet. If it is determined in step 508 that N_Rx is equal to N_Max_Tx, the base station does not transmit an ACK/NAK for the received subpacket, and determines that there will be no additional retransmission of the corresponding encoder packet, in step 510. After determining in step 510 that there will be no additional retransmission, the base station adjusts in step 512 a target setpoint for the outer loop power control according to whether or not the corresponding encoder packet has been successfully received.

However, if it is determined in step 508 that N_Rx is less than N_Max_Tx, the base station proceeds to step 514 where it determines whether or not to transmit an ACK by determining if the corresponding encoder packet has been successfully received. If it is determined to transmit the ACK, the base station transmits the ACK and adjusts a target setpoint for the outer loop power control in step 516. In contrast, if it is determined in step 514 that the corresponding encoder packet has not been successfully received, the base station transmits an NAK in step 518.

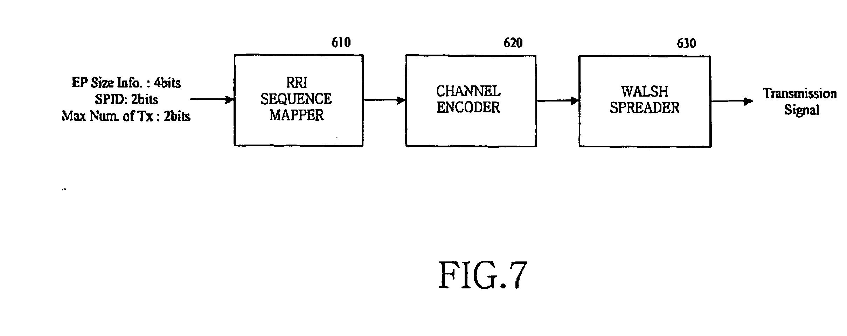

FIG. 7 is a block diagram illustrating a mobile station transmitter for transmitting an RRI sequence in a reverse direction according to an embodiment of the present invention. For simplicity, FIG. 7 does not show a controller for determining the N_Max_Tx, and shows only a transmitter for transmitting the determined N_Max_Tx in a mobile station.

Referring to FIG. 7, an RRI sequence mapper 610 receives the EP size of a transmitted encoder packet, the SPID and the N_Max_Tx, and maps the received parameters to a corresponding RRI sequence. For example, the RRI sequence mapper 610 maps according to the mapping rule illustrated in FIG. 5. An RRI sequence output from the RRI sequence mapper 610 is channel-encoded by a channel encoder 620, and then spread with a Walsh code by a Walsh spreader 630 before being transmitted.

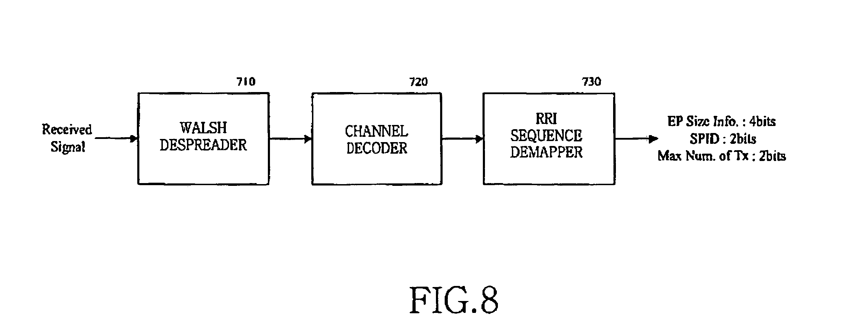

FIG. 8 is a block diagram illustrating a base station receiver for receiving an RRI sequence in a reverse direction according to an embodiment of the present invention. For simplicity, FIG 8 docs not show a controller for determining whether or not to transmit an ACK/NAK and perform the power control using the N_Max_Tx and the encoder packet received at a base station, and shows only a receiver for receiving the determined information.

Referring to FIG 8, a Walsh despreader 710 despreads a received RRI channel signal with a Walsh code. The despread signal is input to a channel decoder 720, and the channel decoder 720 decodes the despread signal into an RRI sequence. The decoded RRI sequence is demapped into information related to the EP size of an encoder packet, the SPID, and the N_Max_Tx through the RRI sequence demapping in an RRI sequence dcmapper 730.

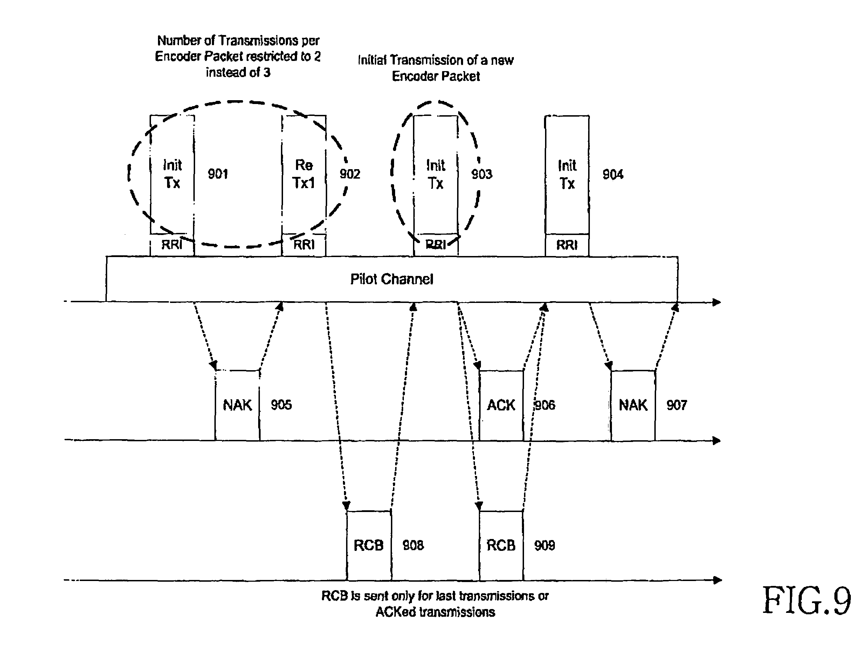

With reference to FIG. 9, a description will now be made of a method for the transmitting/receiving of the reverse data in a mobile communication system supporting the HARQ according to another embodiment of the present invention.

In FIG. 9, a base station determines whether or not to transmit an ACK/NAK and whether or not to receive the ACK/NAK using the information on the maximum number of transmissions by a mobile station. The method of FIG 9 can also be used to employ a forward rate control channel (F-RCCH) transmitted by a base station in addition to efficiently employing the transmission/reception of the ACK/NAK by using the N_Max_Tx, the EP size and the SPID carried by the RRI. The F-RCCH is a forward channel transmitted from a base station to a mobile station, and includes the information on whether to increase or decrease a data rate for each mobile station. The base station transmits a unique rate control bit (RCB) to a mobile station over the F-RCCH. In this manner, the base station separately controls a reverse data rate of each mobile station.

That is, the RCB generally has 1-bit of information, and the base station allows the mobile station to increase or decrease its data rate by one step, using the corresponding 1-bit of information.

FIG 9 is a diagram illustrating a method for the transmitting/receiving of the reverse data in a mobile communication system supporting the HARQ according to another embodiment of the present invention. Likewise, the maximum number of the transmissions between a base station and a mobile station is predefined as 3, and the mobile station has adjusted the maximum number of the transmissions to 2 at its own discretion.

The mobile station sequentially transmits subpackets for a first encoder packet in the reverse time periods 901 and 902 by the initial transmission and the retransmission. Thereafter, the mobile station immediately transmits a first subpacket for a new encoder packet in a time period 903. Here, each of RRIs transmitted in the time periods 901, 902 and 903 includes the information related to the maximum number of transmissions arbitrarily determined by the mobile station in addition to an EP size for an encoder packet transmitted in the corresponding time period and an SPID representing a unique number of the corresponding subpacket.

The base station transmits an ACK/NAK in the method described in connection with FIG. 3. However, an RCB for controlling a reverse data rate of a mobile station is transmitted to the mobile station only when the mobile station transmits a last subpacket for a particular encoder packet or transmits an ACK. That is, the base station transmits an RCB to the mobile station only for a time 908 when a last subpacket 902 for the first encoder packet is received and a time 909 when the received encoder packet is successfully decoded. The reason why the base station transmits an RCB only for a time when a last subpacket is received and a time when a received encoder packet is successfully decoded is because the data rate is maintained regardless of whether an RCB is transmitted in another case, that is, the case where the retransmission should be performed, and a data rate for retransmission is always maintained. For example, the base station does not transmit an RCB to the mobile station after it received a subpacket transmitted by the mobile station in the time period 901. This is because the mobile station has failed to perform the correct decoding on the subpackct for the time period 901 and the subpacket for the time period 901 is not a last transmitted subpacket for the corresponding encoder packet. For this reason, a subpacket for the time period 902 succeeding the time period 901 corresponds to a retransmitted subpacket for the encoder packet transmitted for the time period 901 and a data rate for the retransmission is identical to a data rate for the initial transmission.

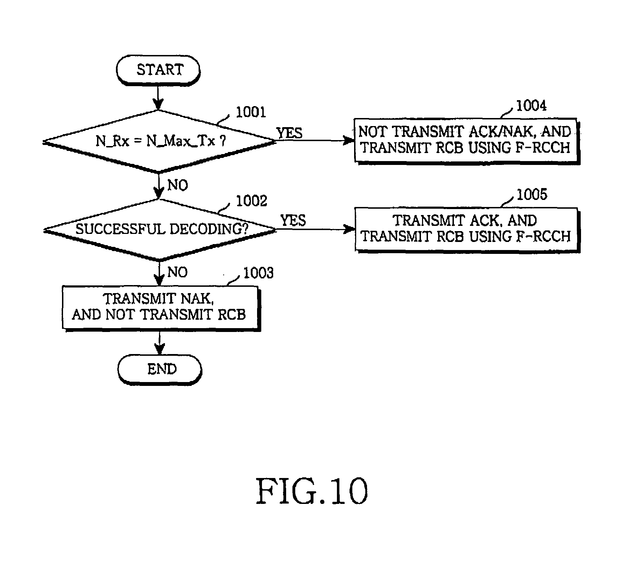

With reference to FIG 10, a description will now be made of a method for the transmitting of a reverse data in a mobile communication system supporting a HARQ according to another embodiment of the present invention. FIG. 10 is a flowchart illustrating the receiving, by a base station, of the information carried by an RRI channel and the transmitting of an RCB.

Referring to FIG. 10, in step 1001, a base station receives from a mobile station the information carried by an RRI channel, and determines whether or not a corresponding subpacket is a last transmitted subpacket using the information related to the EP size, the SPID and the N_Max_Tx in the RRI channel received from the mobile station. If it is determined in step 1001 that the corresponding subpacket is the last transmitted subpacket based on the information carried by the RRI channel, the base station does not transmit an ACK/NAK and transmits an RCB using a F-RCCH in step 1004. The reason for not transmitting the ACK/NAK and transmitting an RCB in step 1004 is because there is no additional retransmission of the corresponding encoder packet and a new initial transmission should be performed.

However, if it is determined in step 1001 that the corresponding subpacket is not the last transmitted subpacket based on the information carried by the RRI channel, the base station receives in step 1002 the corresponding subpacket and determines whether or not the received subpacket has been successfully decoded. If it is determined in step 1002 that decoding of the received subpacket is successful, the base station transmits an ACK signal to the mobile station and transmits an RCB using a F-RCCH in step 1005. However, if it is determined in step 1002 that decoding of the received subpacket has failed, the base station transmits an NAK to the mobile station and docs not transmit an RCB in step 1003.

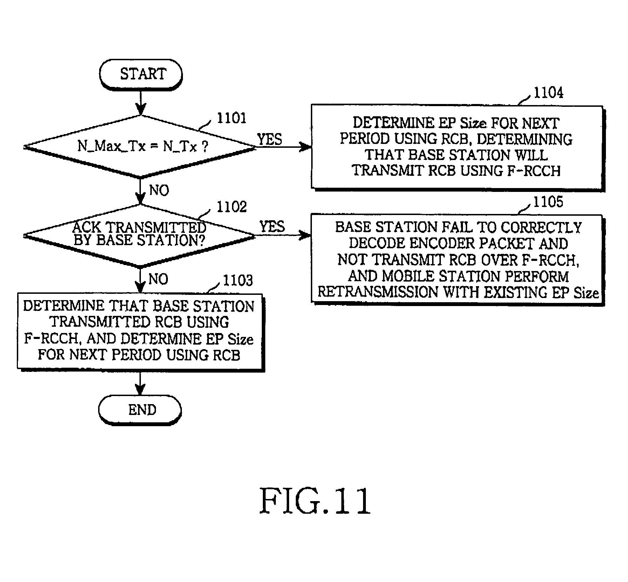

With reference to FIG. 11, a description will now be made of a method for receiving reverse data in a mobile communication system supporting a HARQ according to another embodiment of the present invention. FIG. 11 is a flowchart illustrating the receiving of an RCB in a mobile station.

Referring to FIG. 11, a mobile station determines in step 1101 whether or not a subpackct transmitted to a base station is a last transmitted subpacket. If it is determined that the subpacket that is transmitted to the base station is a last transmitted subpacket, the mobile station proceeds to step 1104 where it docs not receive an ACK/NAK signal transmitted from the base station, receives an RCB transmitted by the base station, and uses the received RCB to determine an EP size of an encoder packet to be newly transmitted, and to determine that an RCB will be received.

In contrast, if it is determined in step 1101 that the transmitted subpacket is not a last transmitted subpacket, the mobile station determines in step 1102 whether or not the base station has transmitted an ACK. If it is determined that the base station has transmitted the ACK, the mobile station determines in step 1103 that the base station has transmitted an RCB together with the ACK. Therefore, when an RCB is received from the base station, the mobile station determines an EP size of an encoder packet to be newly transmitted, using the corresponding RCB.

However, if it is determined in step 1102 that the base station has not transmitted the ACK, the mobile station determines in step 1105 that the base station has failed to correctly decode the corresponding encoder packet. In this case, the mobile station is not required to receive an RCB because it should perform a retransmission on the same encoder packet. Therefore, the mobile station performs the retransmission with the existing EP size.

FIGs. 9 to 11 illustrate operations of a base station and a mobile station in a case where the base station transmits an RCB to the mobile station. Even when a forward grant channel (F-GCH) indicting an increase/decrease in the reverse data rate by multiple steps is used instead of the RCB indicating an increase/decrease in the reverse data rate by one step, FIGs. 9 to 10 can be equally applied. Generally, a F-GCH contains information of multiple bits. The F-GCH is a forward control channel transmitted from the base station to the mobile station, and the base station uses the F-GCH in notifying an allowable maximum reverse data rate for the mobile station.

The present invention has the following advantages. In a mobile communication system that supports a HARQ, a mobile station transmits the information related to the maximum number of the transmissions, which is arbitrarily adjusted by the mobile station, to a base station during each time the mobile station transmits a subpacket, so that the base station can efficiently perform an ACK/NAK transmission and the outer loop power control. In addition, in a mobile communication system supporting a HARQ, a mobile station transmits the information related to the maximum number of the transmissions, which is arbitrarily adjusted by the mobile station, to a base station during each time the mobile station transmits a subpacket, so that the base station can efficiently perform an ACK/NAK transmission and a rate control.

While the invention has been shown and described with reference to a certain preferred embodiment thereof, it will be understood by those skilled in the art that various changes in form and details may be made therein without departing from the spirit and scope of the invention as defined by the appended claims.

## Claims

**1.** A method for transmitting reverse data by a mobile station in a mobile communication system supporting a Hybrid Automatic Repeat reQuest (HARQ), the method comprising the steps of:

determining the maximum number of transmissions for a subpacket of encoder packet; and
generating an information sequence representing the maximum number of transmissions and transmitting the information sequence with the subpacket.

**2.** The method of claim 1, further comprising the step of transmitting another subpacket for the encoder packet if the maximum number of transmissions is not equal to 1, and a negative acknowledgement (NAK) for aninitial subpacket transmission is received from the base station after the initial subpacket transmission.

**3.** The method of claim 2, further comprising the step of transmitting on a next encoder packet without waiting for a response from the base station to an initial subpacket transmission if the maximum number of transmissions is equal to 1.

**4.** The method of claim 1, wherein the information sequence further represents a size of the encoder packet and a subpacket identifier(SPID).

**5.** A method for receiving reverse data by a base station in a mobile communication system supporting a Hybrid Automatic Repeat reQuest (HARQ), the method comprising the steps of:

receiving an information sequence representing a maximum number of transmissions, and a subpacket corresponding to the encoder packet, in a reverse direction;
and
generating and transmitting a response to the subpacket if the number of received subpackets corresponding to the encoder packet is less than the maximum number of transmissions.

**6.** The method of claim 5, wherein the response is acknowledgement(ACK) signal or NACK( Not Acknowledgement) signal..

**7.** The method of claim 5, further comprising the step of suspending a retransmission procedure for the encoder packet without transmitting a response to the subpacket if the number of received subpackets corresponding to the encoder packet is equal to the maximum number of transmissions.

**8.** The method of claim 5, wherein the information sequence further represents a size of the encoder packet and a subpacket identifier(SPID).

**9.** The method of claim 5, further comprising the step of adjusting a power control target setpoint if the encoder packet is defective after suspending the retransmission procedure for the encoder packet.

**10.** An apparatus for transmitting reverse data by a mobile station in a mobile communication system supporting a Hybrid Automatic Repeat reQuest (HARQ), comprising:

a controller for determining the maximum number of transmissions for a subpacket of encoder packet and generating an information sequence representing the maximum number of transmissions; and
a transmitter for encoding the information sequence and transmitting the encoded information sequence with a initial subpacket transmission.

**11.** The apparatus of claim 10, wherein the information sequence further represents a size of the encoder packet and a subpacket identifier(SPID).

**12.** The apparatus of claim 10, wherein if the subpacket for the encoder packet that was transmitted in the reverse direction was transmitted a number of times equal to the maximum number of transmissions, the controller determines that a rate control bit will be received from the base station using a forward rate control channel (F-RCCH), and determines a size of an encoder packet to be transmitted in a next time period using a rate control bit (RCB) received from a base station.

**13.** The apparatus of claim 10, wherein if a subpacket for an encoder packet that was transmitted by the mobile station is not a last transmitted subpacket and no acknowledgement (ACK) is received from a base station, the controller determines that the base station has failed to correctly decode the encoder packet, performs a retransmission at a previous encoder packet size, and performs a retransmission at a previous encoder packet size.

**14.** The apparatus of claim 10, wherein if a subpacket for an encoder packet that was transmitted by the mobile station is not a last transmitted subpacket and an acknowledgement is received from a base station, the controller determines a size of an encoder packet to be transmitted in a next time period using a rate control bit received from the base station,.

**15.** The apparatus of claim 10, wherein if the maximum number of transmissions is not equal to 1, the controller waits for a response from a base station to a initial subpacket transmission , and controls a transmission of another subpacket for the encoder packet if a negative acknowledgement (NAK) is received.

**16.** The apparatus of claim 10, wherein if the determined maximum number of transmissions is equal to 1, the controller transmits on a next encoder packet without waiting for a response to a initial subpacket transmission.

**17.** An apparatus for receiving reverse data by a base station in a mobile communication system supporting a Hybrid Automatic Repeat reQuest (HARQ), comprising:

a receiver for receiving in a reverse direction an information sequence representing a maximum number of transmissions, and a subpacket corresponding to the encoder packet;
a controller for suspending a retransmission procedure for the encoder packet without transmitting a response to the subpacket if a number of received subpackets corresponding to the encoder packet is equal to the maximum number of transmissions, and transmitting a response to the subpackets if the number of received subpackets corresponding to the encoder packet does not equal the maximum number of transmissions.

**18.** The apparatus of claim 17, wherein the information sequence further represents a size of the encoder packet and a subpacket identifier(SPID).

**19.** The apparatus of claim 17, wherein if the subpacket received in a reverse direction is a last transmitted subpacket, the controller transmits a rate control bit (RCB) using a forward rate control channel (F-RCCH).

**20.** The apparatus of claim 17, wherein if the subpacket received in a reverse direction is not a last transmitted subpacket and the encoder packet was successfully decoded, the controller transmits an acknowledgement (ACK) to the mobile station and transmits a rate control bit using a forward rate control channel.

**21.** The apparatus of claim 17, wherein if the subpacket received in a reverse direction is not a last transmitted subpacket and the encoder packet was not successfully decoded, the controller transmits a negative acknowledgement (NAK) using a forward response channel.

**22.** The apparatus of claim 17, wherein the controller adjusts a power control target setpoint if the encoder packet is defective after suspending the retransmission procedure for the encoder packet.

**23.** A method for transmitting reverse data by a mobile station in a mobile communication system supporting a Hybrid Automatic Repeat reQuest (HARQ), the method comprising the steps of:

determining whether a subpacket transmitted to a base station is a last transmitted subpacket or an acknowledgement(ACK) signal is received ;
receiving a rate control bit from the base station if the subpacket is the last transmitted subpacket or the acknowledgement(ACK) signal is received; and
determining an encoder packet size to be transmitted using the rate control bit(RCB).

**24.** The method of claim 23, wherein the rate control bit is received at a forward rate control channel.

**25.** A method for receiving reverse data by a base station in a mobile communication system supporting a Hybrid Automatic Repeat reQuest (HARQ), the method comprising the steps of:

determining whether a subpacket received from a mobile station is a last transmitted subpacket using a information of a maximum number of transmission for a subpacket ;
determining whether the subpacket is decoded successfully; and
transmitting a rate control bit(RCB) using a forward channel if the mobile station is a last transmitted subpacket using information of a maximum number of transmission for a subpacket or if the subpacket is decoded successfully.

**26.** The method of claim 25, wherein the rate control bit is transmitted at a forward rate control channel.

**27.** The method of claim 25, further comprising a step of transmitting a acknowledgement(ACK) signal if the subpacket is decoded successfully.

3 Tx per EP
1 Tx per EP
2 Tx per EP
Init Tx
RRI
102
Re Tx1
RRI
104
Re Tx2
RRI
106
Init Tx
RRI
108
Init Tx
RRI
110
Re Tx1
RRI
112
Init Tx
RRI
114
Pilot Channel
NAK
116
NAK
118
ACK
120
NAK
122
ACK
124

FIG.1

Num. of Tx per
EP restricted to 2 instead of 3
Traffic Channel is DTXed
Init
Tx
RRI
202
Re
Tx1
RRI
204
RRI
206
Init
Tx
RRI
208
Pilot Channel
NAK
210
NAK
212
NAK
214

FIG.2

Num. of Tx per
EP restricted to 2 instead of 3
Initial Tx of a new EP
Init
Tx
302
RRI
Re
Tx1
304
RRI
Init
Tx
306
RRI
Init
Tx
308
RRI
Pilot Channel
NAK
310
ACK
312
NAK
314

FIG.3

INITIAL TRANSMISSION?
402
DETERMINE N_Max_Tx FOR ENCODER PACKET N_Tx=1
404
MAP EP Size, SPID AND N_Max_Tx TO RRI SEQUENCE
406
CHANNEL-ENCODE RRI SEQUENCE AND TRANSMIT CHANNEL-ENCODED RRI SEQUENCE
408
N_Max_Tx = 1 ?
410
YES
NO
RECEIVE ACK/NAK FROM BASE STATION, AND PERFORM RETRANSMISSION IN CASE OF NAK
412
NOT RECEIVE ACK/NAK FROM BASE STATION, AND NOT PERFORM RETRANSMISSION
414
INCREASE N_Tx BY 1
416
MAP EP Size, SPID AND N_Max_Tx TO RRI SEQUENCE
418
CHANNEL-ENCODE RRI SEQUENCE AND TRANSMIT CHANNEL-ENCODED RRI SEQUENCE
420
N_Tx = N_Max_Tx ?
422
YES
NO
NOT RECEIVE ACK/NAK FROM BASE STATION, AND NOT PERFORM RETRANSMISSION
424
RECEIVE ACK/NAK FROM BASE STATION, AND PERFORM RETRANSMISSION IN CASE OF NAK
426

FIG.4

| EP Size | SPID | N_Max_Tx | RRI SEQUENCE |
|---|---|---|---|
| 0 | - | - | 0000 |
| 192 | 00 | 1 | 0001 |
| 192 | 00 | 2 | 0010 |
| 192 | 01 | 2 | 0011 |
| 192 | 00 | 3 | 0100 |
| 192 | 01 | 3 | 0101 |
| 192 | 10 | 3 | 0110 |
| 384 | 00 | 1 | 0111 |
| 384 | 00 | 2 | 1000 |
| 384 | 01 | 2 | 1001 |
| 384 | 00 | 3 | 1010 |
| 384 | 01 | 3 | 1011 |
| 384 | 10 | 3 | 1100 |

FIG.5

RECEIVE RRI
502
ACQUIRE EP Size, SPID AND N_Max_Tx BY DECODING RRI SEQUENCE
504
DECODE TRAFFIC CHANNEL USING EP Size AND SPID
506
N_Rx = N_Max_Tx ?
508
YES
NO
NOT TRANSMIT ACK/NAK, AND DETERMINE NO ADDITIONAL RETRANSMISSION
510
ADJUST TARGET SETPOINT FOR OUTER LOOP POWER CONTROL
512
DECODING ERROR?
514
YES
NO
TRANSMIT ACK, AND ADJUST TARGET SETPOINT FOR OUTER LOOP POWER CONTROL
516
TRANSMIT NAK
518

FIG.6

EP Size Info. : 4bits
SPID: 2bits
Max Num. of Tx : 2bits
610
RRI SEQUENCE MAPPER
620
CHANNEL ENCODER
630
WALSH SPREADER
Transmission Signal

FIG.7

Received Signal
710
WALSH DESPREADER
720
CHANNEL DECODER
730
RRI SEQUENCE DEMAPPER
EP Size Info. : 4bits
SPID : 2bits
Max Num. of Tx : 2bits

FIG.8

Number of Transmissions per Encoder Packet restricted to 2 instead of 3
Initial Transmission of a new Encoder Packet
Init Tx
RRI
901
Re Tx1
RRI
902
Init Tx
RRI
903
Init Tx
RRI
904
Pilot Channel
NAK
905
ACK
906
NAK
907
RCB
908
RCB
909
RCB is sent only for last transmissions or ACKed transmissions

FIG.9

START
1001
N_Rx = N_Max_Tx ?
YES
1004
NOT TRANSMIT ACK/NAK, AND TRANSMIT RCB USING F-RCCH
NO
1002
SUCCESSFUL DECODING?
YES
1005
TRANSMIT ACK, AND TRANSMIT RCB USING F-RCCH
NO
1003
TRANSMIT NAK, AND NOT TRANSMIT RCB
END

FIG.10

START
1101
N_Max_Tx = N_Tx ?
YES
1104
DETERMINE EP Size FOR NEXT PERIOD USING RCB, DETERMINING THAT BASE STATION WILL TRANSMIT RCB USING F-RCCH
NO
1102
ACK TRANSMITTED BY BASE STATION?
YES
1105
BASE STATION FAIL TO CORRECTLY DECODE ENCODER PACKET AND NOT TRANSMIT RCB OVER F-RCCH, AND MOBILE STATION PERFORM RETRANSMISSION WITH EXISTING EP Size
NO
1103
DETERMINE THAT BASE STATION TRANSMITTED RCB USING F-RCCH, AND DETERMINE EP Size FOR NEXT PERIOD USING RCB
END

FIG.11